# EUROPÄISCHE PATENTSCHRIFT

(11) **EP 3 676 123 B1**
(45) Veröffentlichungstag und Bekanntmachung des Hinweises auf die Patenterteilung: **23.06.2021**
(21) Anmeldenummer: 18765379.5
(22) Anmeldetag: 24.08.2018
(51) Int. Cl.: B60K 15/03, B29C 65/16, B29C 65/00

(54) **FLÜSSIGKEITSBEHÄLTER FÜR EIN KRAFTFAHRZEUG UND VERFAHREN ZUM HERSTELLEN EINES FLÜSSIGKEITSBEHÄLTERS**
LIQUID CONTAINER FOR A MOTOR VEHICLE AND METHOD FOR PRODUCING A LIQUID CONTAINER
RÉSERVOIR DE LIQUIDE POUR UN VÉHICULE AUTOMOBILE ET PROCÉDÉ DE FABRICATION D'UN RÉSERVOIR DE LIQUIDE

(30) Priorität: 28.08.2017 DE 102017119708
(43) Veröffentlichungstag der Anmeldung: 08.07.2020
(73) Patentinhaber: Kautex Textron GmbH & Co. KG, 53229 Bonn (DE)
(72) Erfinder: BOUFFIER, Roman, 53639 Königswinter (DE); WOLF, Hartmut, 53639 Königswinter (DE); KOPIEC, Christian, 53842 Troisdorf (DE); GEBERT, Klaus, 47877 Willich (DE); ROSENSTRÄTER, Sebastian Stefan, 50679 Köln (DE); SIGGIA, Fabian, 51143 Köln (DE); HÜTZEN, Markus, 53757 Sankt Augustin (DE)
(74) Vertreter: Richly & Ritschel Patentanwälte PartG mbB
(86) Internationale Anmeldenummer: PCT/EP2018/072929
(87) Internationale Veröffentlichungsnummer: WO 2019/042902

(56) Entgegenhaltungen:
- DE-A1-102013 018 922
- GB-A- 2 390 582
- US-A1- 2003 209 550
- US-A1- 2011 140 314
- US-A1- 2015 102 026

## Beschreibung

Die vorliegende Erfindung betrifft einen Flüssigkeitsbehälter für ein Kraftfahrzeug und ein Verfahren zum Herstellen eines Flüssigkeitsbehälters.

In modernen Kraftfahrzeugen werden eine Vielzahl von Betriebsflüssigkeiten mitgeführt, wie z.B. Kraftstoff, Harnstofflösung zur Abgasnachbehandlung oder Kühlflüssigkeit. Die Flüssigkeiten sind jeweils in einem Flüssigkeitsbehälter aufgenommen. Beispielsweise dienen Kunststoffkraftstoffbehälter zur Bevorratung von Kraftstoff.

Derartige Kunststoffkraftstoffbehälter sollen idealerweise leicht, crashsicher und emissionsarm sein. Bezüglich der Emission müssen die strenger werdenden gesetzlichen Grenzwerte der maximal zulässigen Kraftstoffverdunstungsemissionen von Kohlenwasserstoffen in die Umwelt eingehalten werden. Dies erfordert die Vermeidung von Kraftstoffleckagen unter allen Betriebsbedingungen, wie z.B. bei der Betankung, inklusive der Betankungsentlüftung, bei der Betriebsentlüftung, also der Kraftstoffausgasung bei einem Temperaturanstieg eines Tanksystems, sowie der Diffusion der Kohlenwasserstoffe durch die Behälterwandung.

Um die Diffusion durch die Behälterwandung gering zu halten, weisen bekannte Kraftstoffbehälter eine Diffusionsbarriere auf. Soweit ein solcher Kraftstoffbehälter durch Zusammensetzen zweier spritzgegossener Halbschalen gebildet ist, kann beispielsweise für jede Halbschale eine innenliegende Barriereschicht an einem Trägermaterial angeordnet sein. Hierbei ist nachteilig, dass etwaige im Spritzguss integrierte, in das Vorratsvolumen ragende Anschluss- oder Formelemente des Trägermaterials die Barriereschicht durchbrechen und damit Permeationspfade bilden, über die es zu einer erhöhten Kraftstoffemission kommt.

Das Dokument US2011/140314 beschreibt einen Flüssigkeitsbehälter mit einer ersten Halbschale und mit einer zweiten Halbschale, wobei die Halbschalen ein Vorratsvolumen zur Aufnahme von Flüssigkeit begrenzen, wobei die Halbschalen zwei Trägerschichten mit einer Barriereschicht dazwischen ausweisen. Vor diesem Hintergrund liegt der Erfindung die technische Problemstellung zugrunde einen Flüssigkeitsbehälter und ein Verfahren zum Herstellen eines Flüssigkeitsbehälters anzugeben, welche die voranstehend beschriebenen Nachteile nicht oder zumindest in geringerem Maße aufweisen, und insbesondere eine verringerte diffusionsbedingte Emission eines Flüssigkeitsbehälters ermöglichen.

Die voranstehend beschriebene technische Problemstellung wird jeweils gelöst durch einen Flüssigkeitsbehälter nach Anspruch 1 und ein Verfahren nach Anspruch 15. Weitere Ausgestaltungen der Erfindung ergeben sich aus den abhängigen Ansprüchen und der nachstehenden Beschreibung.

Bei der ersten Halbschale handelt es sich um eine Oberschale eines Kunststoffkraftstoffbehälters für ein Kraftfahrzeug. Bei der zweiten Halbschale handelt es sich um eine Unterschale des Kunststoffkraftstoffbehälters.

Die Oberschale ist im Einbauzustand dem Fahrzeug zugewandt. Die Unterschale ist im fertig montierten Zustand dem Fahrzeug abgewandt bzw. der Straße oder Fahrbahn zugewandt. Durch die innenliegende Anordnung der zweiten Barriereschicht ist die zweite Barriereschicht demnach im Fahrzeugbetrieb vor mechanischem Abrieb, z.B. durch Steinschlag, geschützt.

Für die erste Barriereschicht, die außenliegend angeordnet ist, ist ein derartiger Schutz aufgrund der dem Fahrzeug zugewandten Anordnung nicht erforderlich. Somit kann die Oberschale dazu verwendet werden, innenliegend Anbauteile oder Formelemente anzubringen, insbesondere anzuschweißen, ohne die erste Barriereschicht zu durchbrechen.

Gemäß einer weiteren Ausgestaltung des Flüssigkeitsbehälters ist vorgesehen, dass die erste Trägerschicht auf einer dem Vorratsvolumen zugewandten Seite eines oder mehrere Formelemente, Anschlussteile oder Funktionseinheiten aufweist. Dabei kann es sich beispielsweise um Ventilhalter, Clips zur formschlüssigen und kraftschlüssigen Befestigung von Funktionseinheiten oder Sockel zum stoffschlüssigen Anbinden von Funktionseinheiten handeln. Dadurch, dass die erste Barriereschicht auf einer dem Vorratsvolumen abgewandten Seite der ersten Trägerschicht angeordnet ist, können die Formelemente, Anschlussteile oder Funktionseinheiten auf der dem Vorratsvolumen zugewandten Seite der ersten Trägerschicht angeordnet, angespritzt oder appliziert werden, ohne dass die erste Barriereschicht unterbrochen wird. Somit können beispielsweise in einem Spritzgussverfahren integral oder einstückig gebildete Formelemente hergestellt werden, ohne die strukturelle Integrität der ersten Barriereschicht zu beeinträchtigen.

Bei den Formelementen, Anschlussteilen oder Funktionseinheiten kann es sich beispielsweise um in das Vorratsvolumen auskragend erstreckte Elemente handeln.

Die Formelemente und/oder Anschlussteile können in einem Spritzgussverfahren einstückig mit der ersten Trägerschicht gebildet worden sein und/oder sequenziell an die erste Trägerschicht angespritzt worden sein. Die einstückig im Spritzgussverfahren erfolgende, integrale Anbindung der Formelemente und/oder Anschlussteile hat den Vorteil, dass eine kostengünstige Fertigung der Formelemente und/oder Anschlussteile möglich ist. Das sequenzielle Anspritzen der Formelemente und/oder Anschlussteile bietet den Vorteil einer größeren Gestaltungsfreiheit bezüglich der Wandstärke und Position der Formelemente und/oder Anschlussteile.

Nach einer weiteren Ausgestaltung des Flüssigkeitsbehälters ist vorgesehen, dass alle in dem Vorratsvolumen angeordneten Formelemente, Anschlussteile oder Funktionseinheiten an der ersten Trägerschicht angeordnet sind, wobei keine in dem Vorratsvolumen angeordneten Formelemente, Anschlussteile oder Funktionseinheiten an der zweiten Barriereschicht angeordnet sind. Auf diese Weise können alle erforderlichen Formelemente, Anschlussteile oder Funktionseinheiten innerhalb des Flüssigkeitsbehälters angeordnet werden, ohne dass damit ein Durchbrechen bzw. Unterbrechen der ersten Barriereschicht oder der zweiten Barriereschicht erforderlich wäre.

Alternativ kann vorgesehen sein, dass auf einer der zweiten Trägerschicht abgewandten Seite der zweiten Barriereschicht lokal ein Kunststoff angespritzt ist, der zur Anbindung von einem oder mehreren Formelementen, Anschlussteilen oder Funktionseinheiten dient. Hierbei kann beispielsweise nach dem Herstellen der Trägerschicht im Spritzguss auf einer der Trägerschicht abgewandten Seite der Barriereschicht lokal ein Trägerwerkstoff durch sequenzielles Spritzgießen an die zweite Barriereschicht angespritzt werden. Der lokal angespritzte Kunststoff kann beispielsweise ein Sockel oder plattenartiges Element aus Trägermaterial sein, an dem beispielsweise ein Schwalltopf angeschweißt oder angeklebt werden kann. Auf diese Weise kann eine Funktionseinheit im Bereich der zweiten Halbschale mit innenliegender Barriereschicht angeordnet werden, ohne die zweite Barriereschicht zu durchbrechen oder zu unterbrechen. Somit kann die Barrierewirkung der zweiten Barriereschicht aufrechterhalten werden, wobei zudem Formelemente, Anschlussteile oder Funktionseinheiten im Bereich des lokal angespritzten Kunststoffs der unteren Halbschale angeordnet werden können.

Wenigstens eine der Barriereschichten kann eine einlagige Folie sein, die in einem Spritzgussverfahren stoffschlüssig mit der zugeordneten Trägerschicht verbunden worden ist. Hierzu kann die Folie in einer Werkzeughälfte eines Spritzgusswerkzeugs aufgenommen sein und mit plastifiziertem Trägerwerkstoff angespritzt bzw. hinterspritzt werden. Durch den Spritzgussvorgang wird eine stoffschlüssige Verbindung zwischen der Barrierefolie und der Trägerschicht gebildet. So kann eine Halbschale mit Trägerschicht und Barrierefolie kostengünstig und unter geringem Materialeinsatz hergestellt werden.

Alternativ oder ergänzend kann vorgesehen sein, dass wenigstens eine der Barriereschichten eine mehrlagige Folie ist, die in einem Spritzgussverfahren stoffschlüssig mit der zugeordneten Trägerschicht verbunden worden ist. Bei einer solchen mehrlagigen Folie kann es sich beispielsweise um eine fünfschichtige Folie handeln, die eine zentrale Schicht aus EVOH (Ethylen-Vinylalkohol-Copolymer) enthält, die EVOH-Schicht zweiseitig von einer LDPE (Low-density polyethylene) Schicht bedeckt ist, und wobei die LDPE-Schichten ihrerseits wiederum von HDPE-Schichten (High-density polyethylene) bedeckt sind.

Die Deckschichten einer mehrlagigen Folie können insbesondere artgleich zu dem Trägerwerkstoff ausgebildet sein, um eine zuverlässige stoffschlüssige Verbindung zwischen dem Trägerwerkstoff und der Barrierefolie zu erreichen. So kann die Barrierewirkung einer mehrschichtigen Folie beispielsweise maßgeblich durch eine EVOH-Schicht bereitgestellt werden, während die LDPE-Schichten jeweils als Haftvermittler zu den außenliegenden HDPE-Schichten dienen und die HDPE-Schichten ihrerseits wiederum zur zuverlässigen Anhaftung bzw. stoffschlüssigen Verbindung mit einem Trägermaterial vorgesehen sein kann, wobei das Trägermaterial ebenfalls aus dem HDPE der Deckschichten der Barrierefolie bestehen kann.

Bei dem Flüssigkeitsbehälter kann es sich um einen Kunststoffkraftstoffbehälter zur Aufnahme eines Otto- oder Dieselkraftstoffs handeln. Die Barriereschichten und/oder die Trägerschichten sind insbesondere dazu geeignet mit einem Diesel oder Benzinkraftstoff in Kontakt zu sein. Der Werkstoff der Barrierefolie und der Werkstoff der Trägerschicht müssen daher hinsichtlich ihrer Quelleigenschaften dazu geeignet sein, in unmittelbarem Kontakt mit einem flüssigen Kraftstoff zu stehen. Sowohl der Trägerwerkstoff als auch die Barriereschicht müssen hinsichtlich ihrer chemischen Beständigkeit und Quellungseigenschaften für den Einsatz in direktem Kraftstoffkontakt geeignet sein.

Die einlagige oder mehrlagige Trägerschicht kann einen oder mehrere der folgenden Werkstoffe aufweisen oder aus einem oder mehreren der folgenden Werkstoffe bestehen: Elastomer, thermoplastisches Elastomer, HDPE (High-density polyethylene), faserverstärktes Polyamid, PA (Polyamid), teilaromatisches Polyamid, schlagzähes Polyamid.

Die einlagige oder mehrlagige Barriereschicht kann einen oder mehrere der folgenden Werkstoffe aufweisen oder aus einem oder mehreren der folgenden Werkstoffe bestehen: EVOH (Ethylen-Vinylalkohol-Copolymer), LDPE (Low-density polyethylene), PEEK (Polyetheretherketon), PA (Polyamid), teilaromatisches Polyamid, HDPE (High-density polyethylene), Fluorpolymer. Z.B. kann die Barriereschicht dreilagig aus PA und EVOH aufgebaut sein, wobei eine zentrale EVOH Lage zweiseitig von PA-Deckschichten bedeckt bzw. eingefasst ist. Es können auch ein beispielsweise sechslagiger Wandungsaufbau oder der voranstehend bereits beschriebene, fünflagige Aufbau aus HDPE, LDPE und EVOH vorgesehen sein.
Gemäß einer weiteren Ausgestaltung des Flüssigkeitsbehälters ist vorgesehen, dass die Halbschalen in einem Verbindungsbereich stoffschlüssig miteinander verbunden sind, wobei die erste Trägerschicht in dem Verbindungsbereich stoffschlüssig mit der zweiten Barriereschicht und/oder der zweiten Trägerschicht verbunden ist, die erste Barriereschicht und die zweite Barriereschicht in dem Verbindungsbereich zueinander beabstandet sind und die erste Trägerschicht zweiseitig einfassen, wobei die erste Trägerschicht in dem Verbindungsbereich einen Permeationspfad zwischen dem Vorratsvolumen und einer Umgebung des Flüssigkeitsbehälters bildet.

Die stoffschlüssige Verbindung der Halbschalen zu einem geschlossenen Flüssigkeitsbehälter kann durch ein Kunststoffschweißverfahren, insbesondere nicht kontaktlose Verfahren oder kontaktlose Schweißverfahren, erfolgen. Hierzu zählen beispielsweise das Heizelement-Schweißen, das Vibrationsschweißen, das Strahlungsschweißen, Ultraschallschweißen oder das Warmgasschweißen.

Soweit die Barriereschichten in dem Verbindungsbereich zueinander beabstandet sind und ein Permeationspfad aus Trägermaterial der Trägerschicht gebildet ist, bilden die beiden Barriereschichten damit keine geschlossene Barriereblase, die das Vorratsvolumen im Wesentlichen vollständig, d.h. bis auf die für einen Tank obligatorischen Anschlüsse, einfassen würde, sondern es liegt in dem Verbindungsbereich ein Abschnitt aus erstem Trägermaterial vor, über den eine nicht durch die Barrierefolien begrenzte, diffusionswirksame Verbindung zwischen dem Vorratsvolumen und einer Umgebung besteht.

Um die diffusionsbedingte Emission entlang des Permeationspfads gering zu halten, kann vorgesehen sein, dass in einem Querschnitt betrachtet eine Länge des Permeationspfads größer oder gleich dem zweifachen der Breite des Permeationspfads ist, wobei die Breite des Permeationspfads dem Abstand der Barriereschichten in dem Verbindungsbereich entspricht. Mit anderen Worten sollte ein solcher Permeationspfad in dem Verbindungsbereich möglichst länglich und schmal ausgestaltet werden, um die diffusionsbedingte Emission gering zu halten.

Es kann demnach alternativ oder ergänzend weiter vorgesehen sein, dass in einem Querschnitt betrachtet eine Länge des Permeationspfads größer ist als eine Wanddicke der ersten Halbschale und der zweiten Halbschale.

Eine solche Ausgestaltung kann beispielsweise dadurch erreicht werden, dass der Permeationspfad relativ zu einer horizontalen Ebene in Einbaulage des Flüssigkeitsbehälters betrachtet geneigt verläuft. So kann der Permeationspfad bzw. ein zwischen den Halbschalen gebildeter Verbindungsbereich geneigt oder schräg verlaufen, um den Permeationspfad konstruktiv zu verlängern ohne die Abmaße des Flüssigkeitsbehälters wesentlich zu vergrößern.

Es kann vorgesehen sein, dass die erste Barriereschicht und die zweite Barriereschicht stoffschlüssig miteinander verbunden sind. In diesem Fall ist in einem Verbindungsbereich zwischen den Halbschalen kein Permeationspfad gebildet und die Barriereschichten bilden eine im Wesentlichen geschlossene Barriereblase, die das Vorratsvolumen des Flüssigkeitsbehälters im Wesentlichen vollständig einfasst, mit der Einschränkung, dass die für einen Tank obligatorischen Anschlüsse wie Einfüllstutzen, Entlüftung und/oder Entnahmeöffnung vorgesehen sind. Auf diese Weise kann eine diffusionsbedingte Emission zuverlässig begrenzt werden.

Wenn vorliegend davon gesprochen wird, dass die Barriereschichten das Vorratsvolumen im Wesentlichen vollständig einfassen, so betrifft dies daher insbesondere die Vermeidung eines Permeationspfads im Verbindungbereich zwischen den Halbschalen und es versteht sich, dass zum Befüllen des Flüssigkeitsbehälters mit Kraftstoff und zur Entnahme des Kraftstoffs aus dem Flüssigkeitsbehälters Zuleitungen und Abgänge und/oder Entlüftungsventile vorgesehen sind, im Bereich derer die erste oder zweite Barriereschicht lokal durchbrochen ist. Es können demnach die Wandung einer Halbschale durchdringende Anschlussöffnungen vorgesehen sein. Die Anschlussöffnungen können im Spritzgussverfahren hergestellt worden sein.

Nach einer weiteren Ausgestaltung des Flüssigkeitsbehälters ist vorgesehen, dass die erste Barriereschicht die dem Vorratsvolumen abgewandte Seite der ersten Trägerschicht im Wesentlichen vollständig bedeckt. Auf diese Weise kann eine zuverlässige Kapselung eines beispielsweise zu bevorrateten Flüssigkraftstoffs erreicht werden.

Alternativ oder ergänzend kann vorgesehen sein, dass die zweite Barriereschicht die dem Vorratsvolumen zugewandte Seite der zweiten Trägerschicht im Wesentlichen vollständig bedeckt. Dies dient wiederum der zuverlässigen Verringerung einer diffusionsbedingten Emission.

Die Formulierung "im Wesentlichen vollständig" trägt wiederum den vorstehend bereits diskutierten, ggf. für ein Tanksystem erforderlichen Zu- und Abgängen Rechnung.

Es kann vorgesehen sein, dass wenigstens eine der Halbschalen des Flüssigkeitsbehälters einen Steg hat, wobei der Steg formschlüssig in einer zumindest abschnittsweise komplementär geformten Aufnahme der jeweils anderen Halbschale sitzt, wobei entlang des Stegs eine stoffschlüssige Verbindung der Halbschalen gebildet ist. Beispielsweise kann die erste Halbschale mit einem solchen Steg versehen sein, wobei die erste Halbschale insbesondere einen Deckel für die zweite Halbschale bilden kann.

Die erste und die zweite Halbschale können asymmetrisch aufgebaut sein, wobei die zweite Halbschale beispielsweise eine nach oben offene Schale bildet, die mit der ersten Halbschale verschließbar ist.

Der Steg kann zusammen mit einer komplementären Form eine Zentrierung bilden, sodass beim Zusammenfügen der ersten und der zweiten Halbschale eine zuverlässige stoffschlüssige Verbindung entlang des gesamten umfangsseitig umlaufenden Fügebereichs erreicht wird. Die erste Halbschale kann demnach zum Beispiel einen bezüglich der zweiten Halbschale selbstzentrieren den Deckel bilden.

Ein frei auskragender Wandungsabschnitt der zweiten Halbschale, der zur Aufnahme der ersten Halbschale vorgesehen sein kann, kann beispielsweise eine umlaufende Montagefase haben, die zu einer horizontalen Ebene im Einbauzustand des Flüssigkeitsbehälters geneigt verläuft, um konstruktiv einen verlängerten Permeationspfad auszubilden, ohne die Bauteilabmessungen des Flüssigkeitsbehälters maßgeblich zu erhöhen. Die erste Halbschale kann eine zu der Fase komplementär geformte Ausnehmung oder Falz haben, die durch einen an der ersten Halbschale umlaufenden Schweißkragen oder Steg gebildet sein kann und auf der zweiten Halbschale zentrierbar sein kann.

Gemäß einer weiteren Ausgestaltung des Flüssigkeitsbehälters ist vorgesehen, dass die Barriereschicht der den Steg aufweisenden Halbschale endseitig um den Steg umgeschlagen ist oder den Steg umschließt, wobei die Barriereschicht insbesondere eine Stirnseite des Stegs zumindest teilweise bedeckt. Soweit der Steg zum Beispiel an der ersten Halbschale mit außenliegender Barriereschicht vorgesehen ist, kann ein zumindest abschnittsweises Umschließen des Stegs die Breite eines Permeationspfads zwischen den Barriereschichten lokal im Bereich des Austritts des Permeationspfads hin zur Umgebung verschmälern, um die Barrierewirkung zu erhöhen. Alternativ oder ergänzend kann vorgesehen sein, dass die stirnseitig um den Steg umgeschlagene, außenliegende Barriereschicht oder Barrierefolie der ersten Halbschale an der zweiten Barriereschicht der zweiten Halbschale anliegt und/oder mit dieser stoffschlüssig verbunden ist. Auf diese Weise kann wiederum eine im Wesentlichen geschlossene Barriereblase gebildet werden, die das Vorratsvolumen umfangsseitig im Wesentlichen vollständig einfasst.

Es kann vorgesehen sein, dass der Steg zumindest abschnittsweise aus einem lasertransparenten Kunststoff gebildet ist, wobei die stoffschlüssige Verbindung mittels Laserdurchstrahlschweißen gebildet worden ist. Auf diese Weise kann eine zügige Schweißverbindung hoher Qualität erreicht werden.

Die Wanddicke einer der Trägerschichten für sich genommen kann 2 mm bis 6 mm betragen, insbesondere 2 mm bis 4 mm betragen. Diese geringe Wanddicke kann über beispielsweise 90 % der gesamten Oberfläche einer Halbschale ausgebildet sein, wobei lokale Verstärkungsrippen, Abgänge oder andere lokale Verdickungen vorgesehen sein können.

Die Dicke einer der Barriereschichten, insbesondere Barrierefolien, kann 100 µm bis 1000 µm betragen.

In einem zweiten Aspekt betrifft die Erfindung ein Verfahren gemäß Anspruch 15.

Durch die Kombination einer Halbschale mit außenliegender Barriereschicht mit einer Halbschale mit innenliegender Barriereschicht kann durch das erfindungsgemäße Verfahren ein Flüssigkeitsbehälter angegeben werden, der eine hohe Sicherheit gegenüber diffusionsbedingter Emission bietet und zugleich die Anbindung von Anbauteilen im Inneren bzw. im Vorratsvolumen ermöglicht, ohne die erste Barriereschicht zu durchbrechen.

Nachfolgend wird die Erfindung anhand einer Ausführungsbeispiele darstellenden Zeichnung näher beschrieben. Es zeigen jeweils schematisch:
- Fig. 1: einen erfindungsgemäßen Flüssigkeitsbehälter in einem Querschnitt;
- Fig. 2: eine Ausschnittvergrößerung der Fig. 1;
- Fig. 3: ein weiteres Ausführungsbeispiel eines erfindungsgemäßen Flüssigkeitsbehälters in einem Querschnitt;
- Fig. 4: ein weiteres Ausführungsbeispiel eines erfindungsgemäßen Flüssigkeitsbehälters in einem Querschnitt;
- Fig. 5: ein weiteres Ausführungsbeispiel eines erfindungsgemäßen Flüssigkeitsbehälters in einem Querschnitt;
- Fig. 6: ein weiteres Ausführungsbeispiel eines erfindungsgemäßen Flüssigkeitsbehälters in einem Querschnitt;
- Fig. 7: ein weiteres Ausführungsbeispiel eines erfindungsgemäßen Flüssigkeitsbehälters in einem Querschnitt;
- Fig. 8: ein weiteres Ausführungsbeispiel eines erfindungsgemäßen Flüssigkeitsbehälters in einem Querschnitt;
- Fig. 9: ein weiteres Ausführungsbeispiel eines erfindungsgemäßen Flüssigkeitsbehälters in einem Querschnitt;
- Fig. 10: ein weiteres Ausführungsbeispiel eines erfindungsgemäßen Flüssigkeitsbehälters in einem Querschnitt;
- Fig. 11: ein weiteres Ausführungsbeispiel eines erfindungsgemäßen Flüssigkeitsbehälters in einem Querschnitt;
- Fig. 12: ein weiteres Ausführungsbeispiel eines erfindungsgemäßen Flüssigkeitsbehälters in einem Querschnitt;
- Fig. 13: ein weiteres Ausführungsbeispiel eines erfindungsgemäßen Flüssigkeitsbehälters in einem Querschnitt.

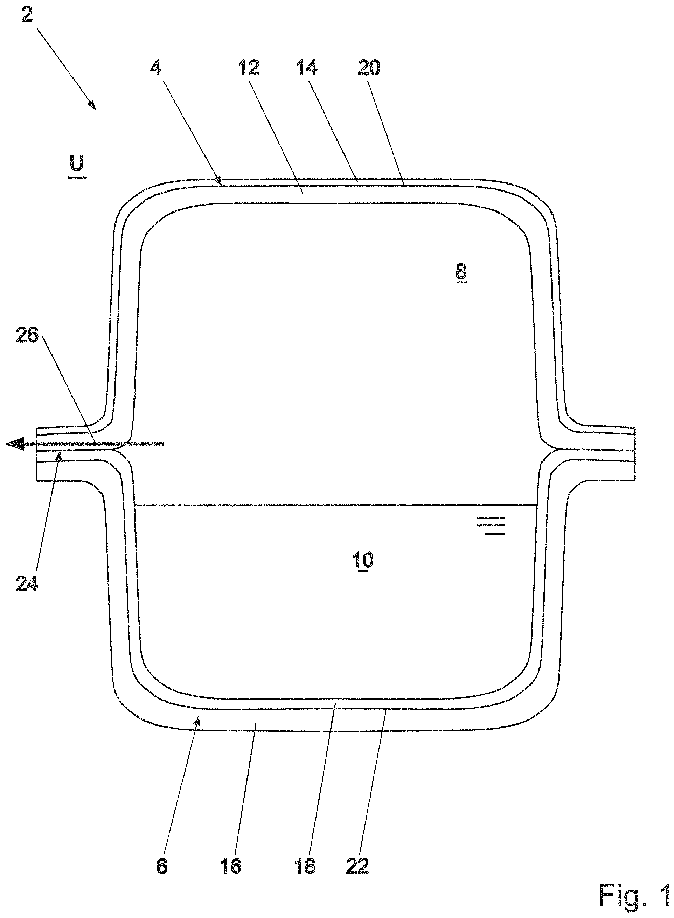

Fig. 1 zeigt einen Flüssigkeitsbehälter 2 für ein Kraftfahrzeug in einem Querschnitt. Bei dem Flüssigkeitsbehälter 2 handelt es sich um einen Kunststoffkraftstoffbehälter 2.

Der Flüssigkeitsbehälter 2 hat eine erste Halbschale 4 und eine zweite Halbschale 6. Die Halbschalen 4, 6 begrenzen ein Vorratsvolumen 8 zur Aufnahme von Flüssigkeit 10. Bei der Flüssigkeit 10 handelt es sich vorliegend um Kraftstoff 10 zum Betrieb eines Verbrennungsmotors eines Kraftfahrzeugs. Die erste Halbschale 4 hat eine erste Trägerschicht 12 und eine erste Barriereschicht 14. Die zweite Halbschale 6 hat eine zweite Trägerschicht 16 und eine zweite Barriereschicht 18.

Die erste Barriereschicht 14 ist auf einer dem Vorratsvolumen 8 abgewandten Seite 20 der ersten Trägerschicht 12 angeordnet. Die zweite Barriereschicht 18 ist auf einer dem Vorratsvolumen 8 zugewandten Seite 22 der zweiten Trägerschicht 16 angeordnet. Die erste Barriereschicht 14 kann daher als außenliegende Barriereschicht 14 bezeichnet werden, während die Barriereschicht 18 als innenliegende Barriereschicht 18 bezeichnet werden kann.

In dem Beispiel der Fig. 1 ist die erste Barriereschicht 14 eine einlagige Folie, die in einem Spritzgussverfahren stoffschlüssig mit der Trägerschicht 12 verbunden worden ist. Weiter ist auch die zweite Trägerschicht 16 in einem Spritzgussverfahren an die zweite Barriereschicht 18 angespritzt worden, um die zweite Barriereschicht 18 stoffschlüssig mit der zweiten Trägerschicht 16 zu verbinden. Auch die zweite Barriereschicht 18 ist vorliegend als einlagige Folie ausgebildet.

Es versteht sich, dass gemäß weiteren Ausführungsbeispielen der Erfindung die erste Barriereschicht einlagig sein kann, insbesondere eine einlagige Folie, während die zweite Barriereschicht mehrlagig sein kann, insbesondere eine mehrlagige Folie, die jeweils im Spritzgussverfahren mit zugeordneten Trägerschichten verbunden worden sind.

Die Halbschalen 4, 6 sind in einem Verbindungsbereich 24 stoffschlüssig miteinander verbunden. Dabei ist die erste Trägerschicht 12 in dem Verbindungsbereich 24 stoffschlüssig mit der zweiten Barriereschicht 18 verbunden. Die erste Barriereschicht 14 und die zweite Barriereschicht 18 sind in dem Verbindungsbereich 24 zueinander beabstandet und fassen die erste Trägerschicht 12 zweiseitig ein.

Die erste Trägerschicht 12 bildet in dem Verbindungsbereich 24 einen Permeationspfad 26 zwischen dem Vorratsvolumen 8 und einer Umgebung U des Flüssigkeitsbehälters 2. Mit anderen Worten bilden die erste Barriereschicht 14 und die zweite Barriereschicht 18 im Verbindungsbereich 24 keine geschlossene Barriereblase, die das Vorratsvolumen 8 im Wesentlichen vollständig einfassen würde, sondern begrenzen zweiseitig den Permeationspfad 26.

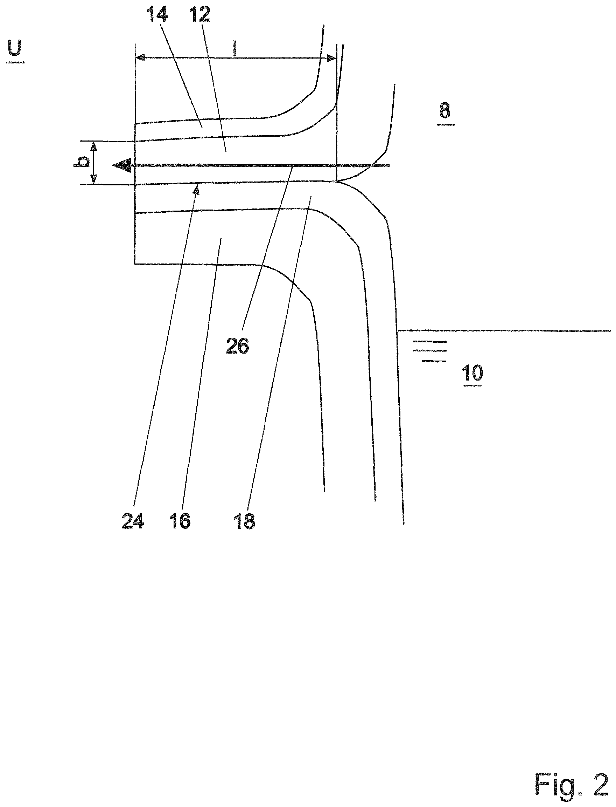

Fig. 2 zeigt eine vergrößerte Darstellung des Verbindungsbereichs 24 aus Fig. 1. Wie Fig. 2 zu entnehmen ist, ist eine Länge l des Permeationspfads 26 größer dem Zweifachen der Breite b des Permeationspfads 26. Die Breite b des Permeationspfads 26 entspricht dem Abstand der Barriereschichten 14, 18 in dem Verbindungsbereich 24. Über den Permeationspfad 26 findet daher gemäß dem ersten Ausführungsbeispiel eine diffusionsbedingte Emission des Kraftstoffs 10 über das Material der ersten Trägerschicht 12 in die Umgebung U statt.

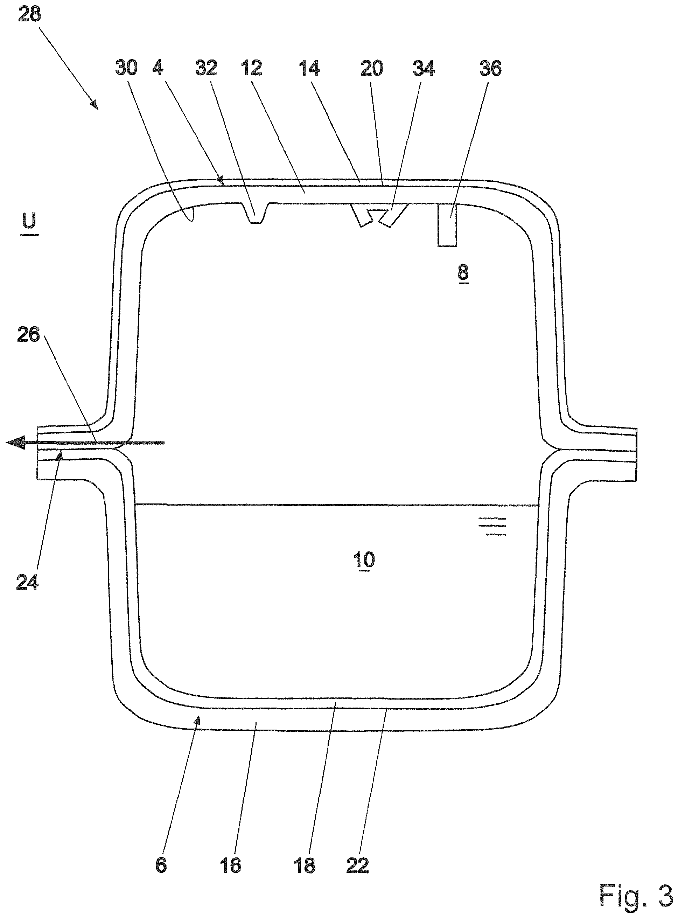

Fig. 3 zeigt ein weiteres Ausführungsbeispiel eines erfindungsgemäßen Flüssigkeitsbehälters 28. Bei dem Flüssigkeitsbehälter 28 handelt es sich um einen Kunststoffkraftstoffbehälter 28 für ein Kraftfahrzeug. Nachfolgend werden in Bezug zu Fig. 2 gleichen Merkmalen gleiche Bezugszeichen zugeordnet. Zur Vermeidung von Wiederholungen wird daher lediglich auf die Unterschiede zu dem ersten Ausführungsbeispiel eingegangen.

Die erste Trägerschicht 12 des Flüssigkeitsbehälters 28 hat auf einer dem Vorratsvolumen 8 zugewandten Seite 30 ein Formelement 32, ein Anschlussteil 34 und eine Funktionseinheit 36. Das Formelement 32 ist im Spritzgussverfahren einstückig mit der ersten Trägerschicht 12 gebildet worden und kann zur Aussteifung der Struktur dienen. Das Anschlussteil 34 ist vorliegend ein Clip, der zur Befestigung von Funktionseinheiten innerhalb des Flüssigkeitsbehälters 28 dienen kann. Der Clip 34 ist nachträglich stoffschlüssig mit der im Spritzgussverfahren geformten Trägerschicht 12 verbunden worden. Dies gilt gleichermaßen für die Funktionseinheit 36, die vorliegend z.B. ein Drucksensor oder Füllstandsensor sein kann.

Das Formelement 32, das Anschlussteilen 34 und die Funktionseinheit 36 sind in das Vorratsvolumen 8 auskragend erstreckt. In dem vorliegenden Beispiel des Flüssigkeitsbehälters 28 gemäß Fig. 3 sind alle in dem Vorratsvolumen angeordneten Formelemente 32, Anschlussteile 34 und Funktionseinheiten 36, für die einzeln exemplarisch dargestellt sind, an der ersten Trägerschicht 12 angeordnet, wobei keine in dem Vorratsvolumen 8 angeordneten Formelemente, Anschlussteile oder Funktionseinheiten an der zweiten Barriereschicht 18 angeordnet sind.

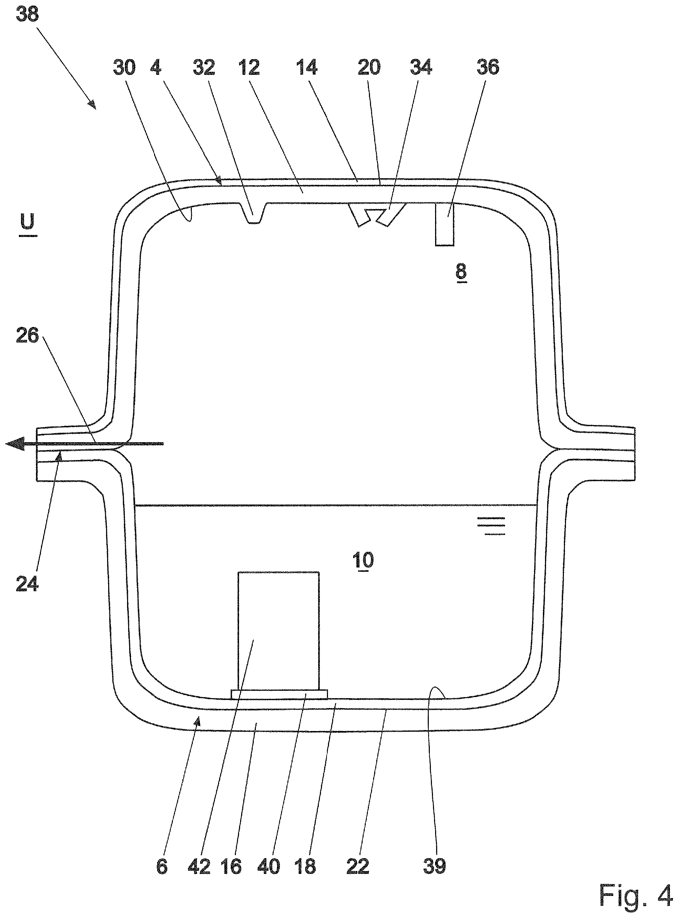

Fig. 4 zeigt eine weitere erfindungsgemäße Variante eines Flüssigkeitsbehälters 38. Bei dem Flüssigkeitsbehälter 38 handelt es sich um einen Kunststoffkraftstoffbehälter 38 für ein Kraftfahrzeug. Zur Vermeidung von Wiederholungen wird wiederum lediglich auf die Unterschiede des Ausführungsbeispiels gemäß Fig. 4 zu dem zuletzt diskutierten Ausführungsbeispiel gemäß Fig. 3 eingegangen. Gleichen Merkmalen werden gleiche Bezugszeichen zugeordnet.

Im Unterschied zu dem Flüssigkeitsbehälter 28 aus Fig. 3 ist bei dem Flüssigkeitsbehälter 38 der Fig. 4 auf einer der zweiten Trägerschicht 16 abgewandten Seite 39 der zweiten Barriereschicht 18 lokal ein Kunststoff 40 angespritzt, der zur Anbindung von Formelementen, Anschlussteilen oder Funktionseinheiten dient.
Der lokal angespritzte Kunststoff 40 bildet vorliegend einen Sockel 40 an dem ein Schwalltopf 42 angeschweißt ist.

Der Sockel 40 ist durch sequenzielles Spritzgießen erzeugt worden. Hierbei ist die in einem Spritzgusswerkzeug gehaltene Barrierefolie 18 zunächst mit der Trägerschicht 16 stoffschlüssig verbunden worden. In einem nachfolgenden, zweiten Spritzgussschritt ist auf der der Trägerschicht 16 abgewandten Seite 39 der Barriereschicht 18 der Sockel 40 angespritzt worden. In einem weiteren Schritt ist der Schwalltopf 42 stoffschlüssig durch Verschweißen mit dem Sockel 40 verbunden worden. Auf diese Weise konnte der Schwalltopf 42 bei innenliegende Barriereschicht 18 in das Vorratsvolumen 8 eingebunden werden, ohne die strukturelle Integrität der Barriereschicht 18 zu zerstören.

Es können weitere Elemente, wie Ventile, Venturi-Düsen oder dergleichen an dem Sockel oder mehreren separaten Sockeln bzw. lokalen Materialanspritzungen vorgesehen sein.

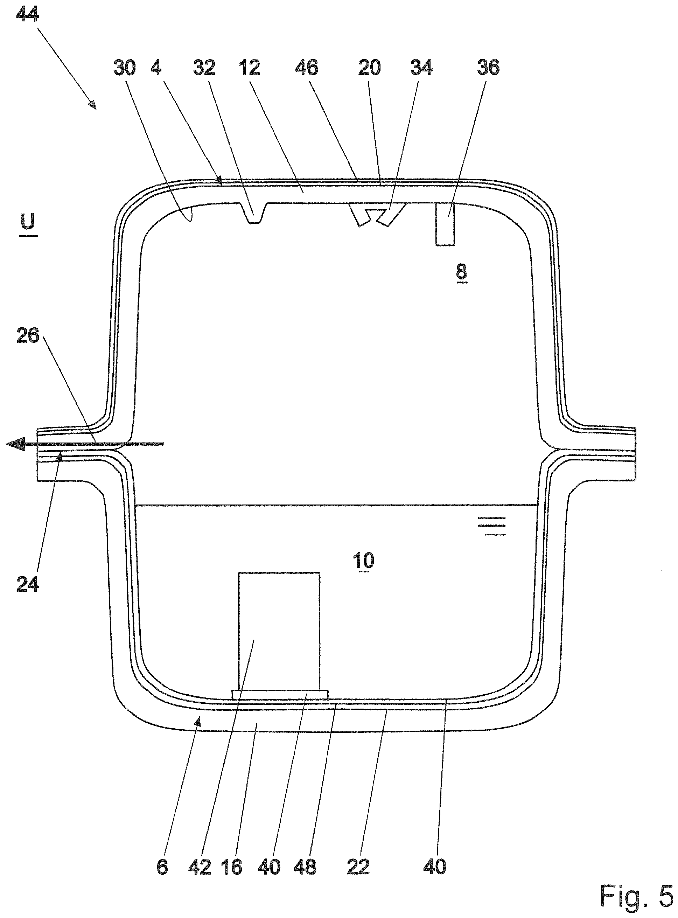

Fig. 5 zeigt eine weitere Variante eines erfindungsgemäßen Flüssigkeitsbehälters 44. Bei dem Flüssigkeitsbehälter 44 handelt es sich um einen Kunststoffkraftstoffbehälter 44 für ein Kraftfahrzeug. Im Unterschied zu den voranstehend beschriebenen Ausführungsbeispielen sind eine erste Barriereschicht 46 und eine zweite Barriereschicht 48 vorgesehen, die als mehrlagige Folien 46, 48 ausgeführt sind.

Die erste Barriereschicht 48 weist eine zentrale Schicht aus EVOH auf, die zweiseitig von Haftvermittlerschichten aus LDPE bedeckt ist. Die Haftvermittlerschichten aus LDPE sind wiederum von Deckschichten aus HDPE bedeckt. Dieser fünfschichtige, stoffschlüssig verbundene Schichtfolienverbund bildet die erste Barriereschicht 46. Die erste Trägerschicht 12 ist vorliegend ebenfalls aus dem HDPE der Deckschichten der ersten Barriereschicht gebildet, so dass die erste Barriereschicht 46 und die erste Trägerschicht 12 im Spritzgussverfahren stoffschlüssig mit artgleichen Materialien verbunden worden sind. Die zweite Barriereschicht 48 der zweiten Halbschale 6 ist analog hierzu aufgebaut, wobei diese wiederum innenliegend an der zweiten Trägerschicht 16 angeordnet ist.

Es versteht sich, dass gemäß weiteren Ausführungsbeispielen der Erfindung beispielsweise die erste Halbschale mit einer einlagigen Barriereschicht oder Folie versehen sein kann, während die zweite Halbschale eine mehrlagige oder mehrschichtige Folie als Barriereschicht aufweisen kann, oder umgekehrt.

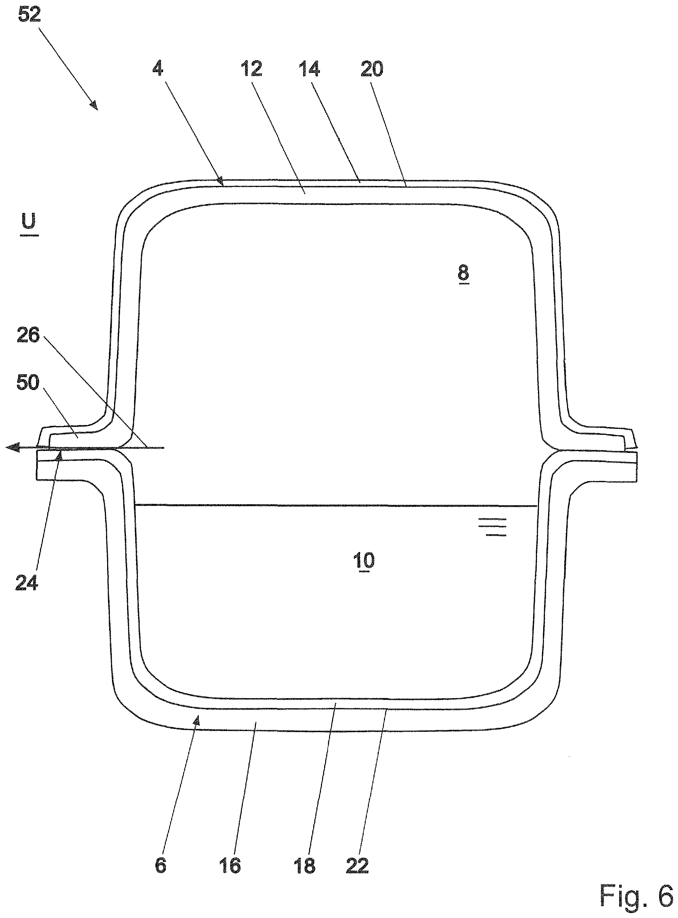

Fig. 6 zeigt eine weitere Variante eines erfindungsgemäßen Flüssigkeitsbehälters 52, bei dem die Barriereschicht 14 einen an der Trägerschicht 12 gebildeten Steg 50 stirnseitig zumindest abschnittsweise umschließt. Der Permeationspfad 26 des in Fig. 6 gezeigten Flüssigkeitsbehälters 52 ist damit stirnseitig durch das Umschlagen der Barriereschicht 40 verengt, um die diffusionsbedingte Emission von Kraftstoff 10 in die Umgebung U gering zu halten.

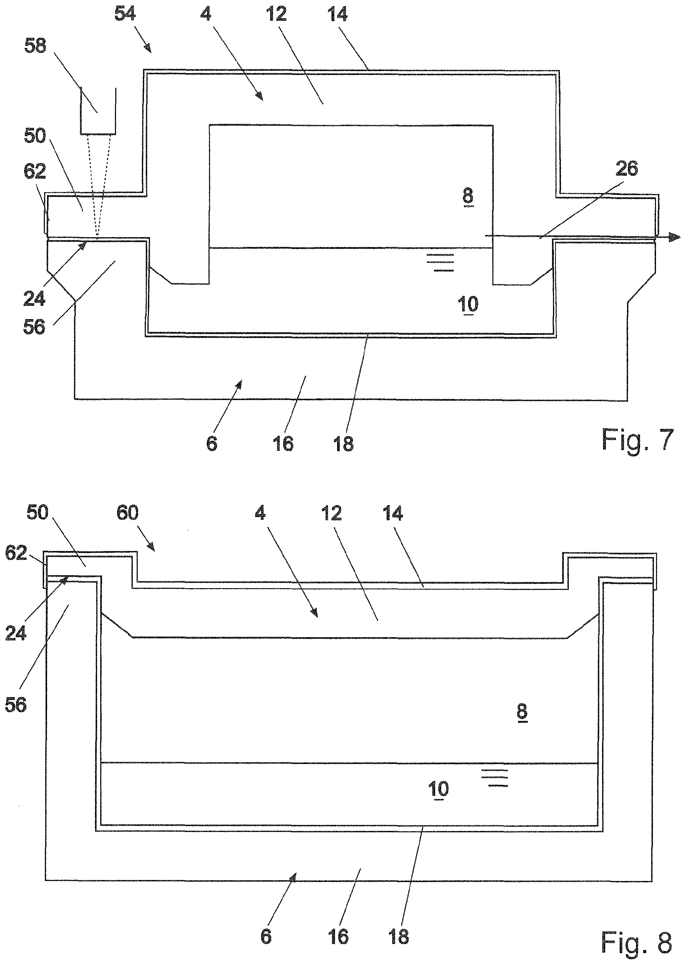

In den Figuren 7-13 sind weitere Varianten erfindungsgemäßer Flüssigkeitsbehälter gezeigt, die sich insbesondere in der Geometrie der Verbindungsbereiche zwischen den Halbschalen voneinander unterscheiden.

Fig. 7 zeigt einen Flüssigkeitsbehälter 54 dessen erste Halbschale 4 einen Steg 50 hat, wobei der Steg 50 formschlüssig in einer zumindest abschnittsweise komplementär geformten Aufnahme 56 der zweiten Halbschale 6 sitzt. Die erste Trägerschicht 12 der ersten Halbschale 4 und die erste Barriereschicht 14 der ersten Halbschale 4 sind gemäß dem Ausführungsbeispiel der Fig. 7 aus einem lasertransparenten Kunststoff hergestellt, sodass die zweite Barriereschicht 18, die vorliegend aus einem nicht-lasertransparenten Kunststoff gebildet ist, mittels Laserdurchstrahlschweißen mithilfe eines Lasers 58 mit der ersten Trägerschicht 12 verschweißt werden kann.

Fig. 8 zeigt eine weitere Variante eines Flüssigkeitsbehälters 60, die sich dahingehend von der Variante der Fig. 7 unterscheidet, dass die erste Barriereschicht 14 mit der zweiten Barriereschicht 18 überlappend angeordnet ist. Im Bereich der Überlappung sind die Barriereschichten 14, 18 stoffschlüssig miteinander verbunden.

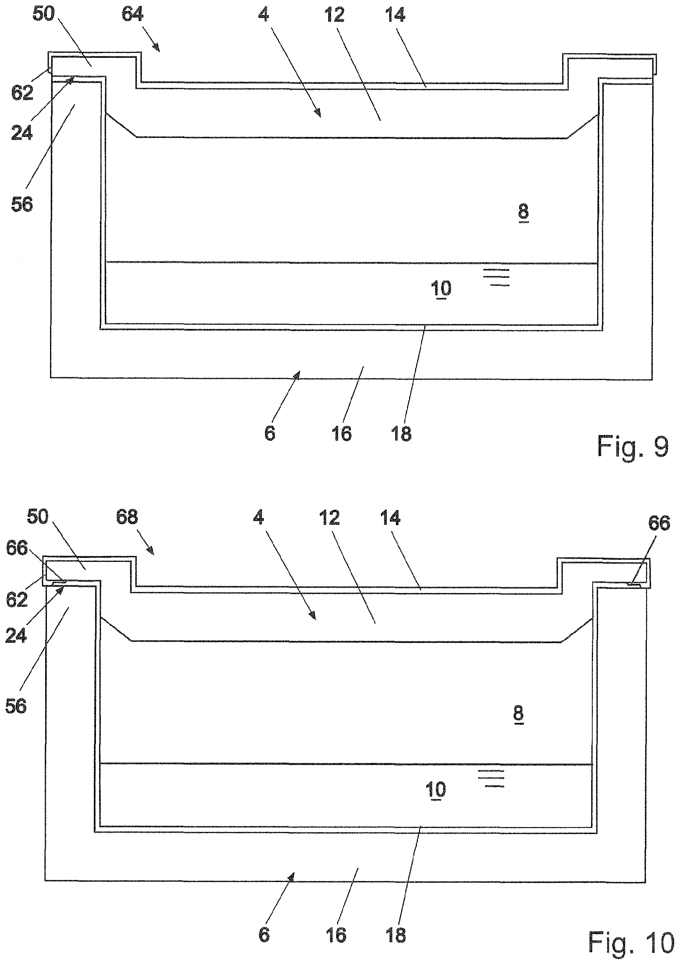

Fig. 9 zeigt eine weitere Variante eines erfindungsgemäßen Flüssigkeitsbehälters 64, wobei die erste Halbschale 4 einen Deckel der zweiten Halbschale 6 bildet. Die erste Barriereschicht 14 ist im Bereich des umlaufenden Stegs 50 stirnseitig umgeschlagen, sodass eine Stirnseite 62 des Stegs 50 zumindest teilweise bedeckt ist.

Fig. 10 zeigt eine weitere Variante eines erfindungsgemäßen Flüssigkeitsbehälters 68, wobei im Unterschied zur Variante der Fig. 9 die Barriereschichten 14, 18 vorliegend stoffschlüssig miteinander verbunden sind. So ist die erste Barriereschicht 14 um den umlaufenden Steg 50 vollständig umschlagen, d.h. die Stirnseite 62 ist vollständig von der Barriereschicht 14 bedeckt, sodass die Barriereschichten 14, 18 im Bereich einer Überlappung 66 miteinander verschweißt sind.

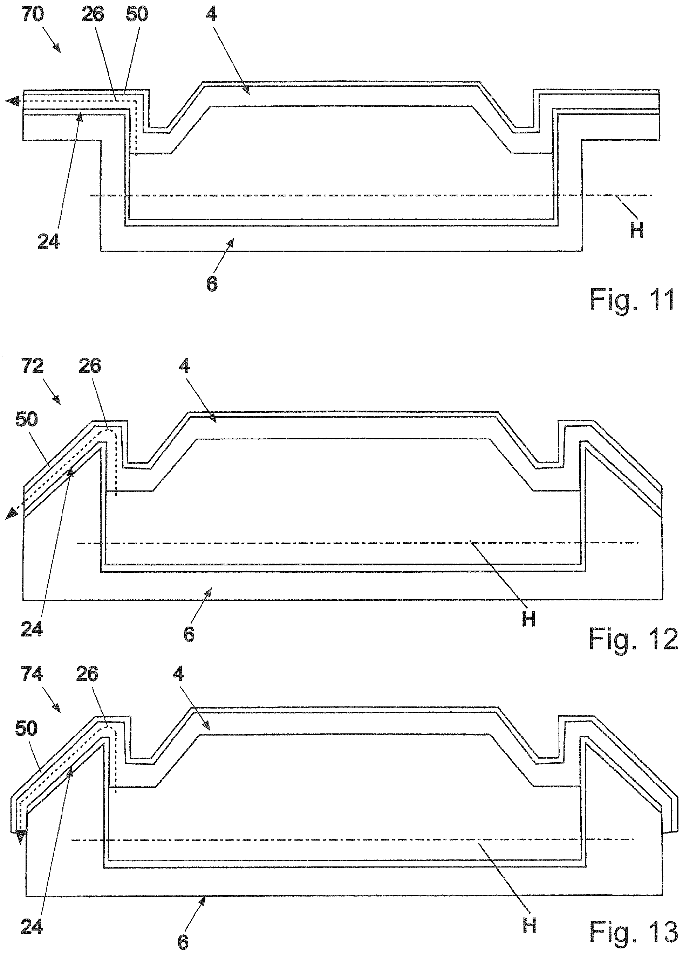

Die Figuren 11-13 beschreiben Flüssigkeitsbehälter 70, 72, 74 und verdeutlichen, wie durch eine konstruktive Optimierung des Verbindungsbereichs 24 die Länge des Permeationspfads 26 vergrößert werden kann, um die diffusionsbedingte Kraftstoffemission einzuschränken.

Für die Variante der Fig. 11, die einen Flüssigkeitsbehälter 70 beschreibt, ergibt sich für die drei gezeigten Beispiele der Figuren 11, 12 und 13 die kürzeste Permeationspfad 26. Durch eine schräg zu einer horizontalen Ebene H orientierte Ausrichtung des Stegs 50 kann der der Permeationspfad 26 verlängert werden (Fig. 12).

Soweit der Steg 50 weiter entlang einer Außenseite der zweiten Halbschale 6 verlängert konstruiert wird, wie in Fig. 13 dargestellt, lässt sich der Permeationspfad 26 weiter verlängern, um die diffusionsbedingte Emission weiter einzuschränken.

### Bezugszeichen

- 2: Flüssigkeitsbehälter/Kunststoffkraftstoffbehälter
- 4: erste Halbschale
- 6: zweite Halbschale
- 8: Vorratsvolumen
- 10: Flüssigkeit/Kraftstoff
- 12: erste Trägerschicht
- 14: erste Barriereschicht
- 16: zweite Trägerschicht
- 18: zweite Barriereschicht
- 20: Seite
- 22: Seite
- 24: Verbindungsbereich
- 26: Permeationspfad
- 28: Flüssigkeitsbehälter/Kunststoffkraftstoffbehälter
- 30: Seite
- 32: Formelement
- 34: Anschlussteil
- 36: Funktionseinheit
- 38: Flüssigkeitsbehälter/Kunststoffkraftstoffbehälter
- 39: Seite
- 40: lokale Kunststoffanspritzung/Sockel
- 42: Schwalltopf
- 44: Flüssigkeitsbehälter/Kunststoffkraftstoffbehälter
- 46: erste Barriereschicht
- 48: Barriereschicht
- 50: Steg
- 52: Flüssigkeitsbehälter/Kunststoffkraftstoffbehälter
- 54: Flüssigkeitsbehälter/Kunststoffkraftstoffbehälter
- 56: Aufnahme
- 58: Laser
- 60: Flüssigkeitsbehälter
- 62: Stirnseite
- 64: Flüssigkeitsbehälter
- 66: Überlappung
- 68: Flüssigkeitsbehälter/Kunststoffkraftstoffbehälter
- 70: Flüssigkeitsbehälter/Kunststoffkraftstoffbehälter
- 72: Flüssigkeitsbehälter/Kunststoffkraftstoffbehälter
- 74: Flüssigkeitsbehälter/Kunststoffkraftstoffbehälter
- l: Lange
- b: Breite
- H: Ebene

## Patentansprüche

1. Flüssigkeitsbehälter für ein Kraftfahrzeug,
- mit einer ersten Halbschale (4), die eine Oberschale des Flüssigkeitsbehälters (2, 28, 38, 44, 52, 54, 60, 64, 68, 70, 72, 74) bildet, und
- mit einer zweiten Halbschale (6), die eine Unterschale des Flüssigkeitsbehälters (2, 28, 38, 44, 52, 54, 60, 64, 68, 70, 72, 74) bildet,
- wobei die Halbschalen (4, 6) ein Vorratsvolumen (8) zur Aufnahme von Flüssigkeit (10) begrenzen,
- wobei die erste Halbschale (4) eine erste Trägerschicht (12) und eine erste Barriereschicht (14, 46) hat,
- wobei die zweite Halbschale (6) eine zweite Trägerschicht (16) und eine zweite Barriereschicht (18, 48) hat,
- wobei die erste Barriereschicht (14, 46) außenliegend auf einer dem Vorratsvolumen (8) abgewandten Seite (20) der ersten Trägerschicht (12) angeordnet ist und
- wobei die zweite Barriereschicht (18, 48) innenliegend auf einer dem Vorratsvolumen (8) zugewandten Seite (22) der zweiten Trägerschicht (16) angeordnet ist.

2. Flüssigkeitsbehälter nach Anspruch 1,
**dadurch gekennzeichnet,**
- **dass** die erste Trägerschicht (12) auf einer dem Vorratsvolumen (8) zugewandten Seite (30) eines oder mehrere Formelemente (32), Anschlussteile (34) oder Funktionseinheiten (36) aufweist.

3. Flüssigkeitsbehälter nach Anspruch 2,
**dadurch gekennzeichnet,**
- **dass** die Formelemente (32), Anschlussteile (34) oder Funktionseinheiten (36) in das Vorratsvolumen (8) auskragend erstreckt sind
und/oder
- **dass** die Formelemente (32) und/oder Anschlussteile (34) in einem Spritzgussverfahren einstückig mit der ersten Trägerschicht (12) gebildet worden sind und/oder sequentiell an die erste Trägerschicht (12) angespritzt worden sind.

4. Flüssigkeitsbehälter nach Anspruch 2 oder Anspruch 3,
**dadurch gekennzeichnet,**
- **dass** alle in dem Vorratsvolumen (8) angeordneten Formelemente (32), Anschlussteile (34) oder Funktionseinheiten (36) an der ersten Trägerschicht (12) angeordnet sind, wobei keine in dem Vorratsvolumen angeordneten Formelemente, Anschlussteile oder Funktionseinheiten an der zweiten Barriereschicht (18, 48) angeordnet sind.

5. Flüssigkeitsbehälter nach einem der Ansprüche 1 bis 3
**dadurch gekennzeichnet,**
- **dass** auf einer der zweiten Trägerschicht (16) abgewandten Seite (39) der zweiten Barriereschicht (18, 48) lokal ein Kunststoff (40) angespritzt ist, der zur Anbindung von Formelementen, Anschlussteilen oder Funktionseinheiten (42) dient.

6. Flüssigkeitsbehälter nach einem der Ansprüche 1 bis 5,
**dadurch gekennzeichnet,**
- **dass** wenigstens eine der Barriereschichten (14, 18) eine einlagige Folie (14, 18) ist, die in einem Spritzgussverfahren stoffschlüssig mit der zugeordneten Trägerschicht (12, 16) verbunden worden ist,
und/oder
- **dass** wenigstens eine der Barriereschichten (46, 48) eine mehrlagige Folie (46, 48) ist, die in einem Spritzgussverfahren stoffschlüssig mit der zugeordneten Trägerschicht (12, 16) verbunden worden ist.

7. Flüssigkeitsbehälter nach einem der Ansprüche 1 bis 6,
**dadurch gekennzeichnet,**
- **dass** die Halbschalen (4, 6) in einem Verbindungsbereich (24) stoffschlüssig miteinander verbunden sind, wobei die erste Trägerschicht (12) in dem Verbindungsbereich (24) stoffschlüssig mit der zweiten Barriereschicht (18, 48) und/oder der zweiten Trägerschicht verbunden ist, und
- **dass** die erste Barriereschicht (14, 46) und die zweite Barriereschicht (18, 48) in dem Verbindungsbereich (24) zueinander beabstandet sind und die erste Trägerschicht (12) zweiseitig einfassen, wobei die erste Trägerschicht (12) in dem Verbindungsbereich (24) einen Permeationspfad (26) zwischen dem Vorratsvolumen (8) und einer Umgebung (U) des Flüssigkeitsbehälters bildet.

8. Flüssigkeitsbehälter nach Anspruch 7,
**dadurch gekennzeichnet,**
- **dass** in einem Querschnitt betrachtet eine Länge (l) des Permeationspfads (26) größer oder gleich dem Zweifachen der Breite (b) des Permeationspfads (26) ist,
- wobei die Breite (b) des Permeationspfads dem Abstand der Barriereschichten (14, 18, 46, 48) in dem Verbindungsbereich (24) entspricht.

9. Flüssigkeitsbehälter nach Anspruch 7 oder 8,
**dadurch gekennzeichnet,**
- **dass** in einem Querschnitt betrachtet eine Länge des Permeationspfads größer ist, als eine Wanddicke der ersten Halbschale (4) und der zweiten Halbschale (6).

10. Flüssigkeitsbehälter nach einem der Ansprüche 1 bis 6,
**dadurch gekennzeichnet,**
- **dass** die erste Barriereschicht (14, 46) und die zweite Barriereschicht (18, 48) stoffschlüssig miteinander verbunden sind.

11. Flüssigkeitsbehälter nach einem der Ansprüche 1 bis 10,
**dadurch gekennzeichnet,**
- **dass** die erste Barriereschicht (14, 46) die dem Vorratsvolumen (8) abgewandte Seite (20) der ersten Trägerschicht (12) im Wesentlichen vollständig bedeckt
und/oder
- **dass** die zweite Barriereschicht (18, 48) die dem Vorratsvolumen (8) zugewandte Seite (22) der zweiten Trägerschicht (16) im Wesentlichen vollständig bedeckt.

12. Flüssigkeitsbehälter nach einem der Ansprüche 1 bis 11,
**dadurch gekennzeichnet,**
- **dass** wenigstens eine der Halbschalen (4, 6) einen Steg (50) hat, wobei der Steg (50) formschlüssig in einer zumindest abschnittsweise komplementär geformten Aufnahme (56) der jeweils anderen Halbschale (4, 6) sitzt
- wobei entlang des Stegs (50) eine stoffschlüssige Verbindung der Halbschalen (4, 6) gebildet ist.

13. Flüssigkeitsbehälter nach Anspruch 12,
**dadurch gekennzeichnet**,
- die Barriereschicht (14, 46) der den Steg (50) aufweisenden Halbschale (4) endseitig um den Steg (50) umgeschlagen ist oder den Steg (50) umschließt, wobei die Barriereschicht insbesondere eine Stirnseite (62) des Stegs (50) zumindest teilweise bedeckt.

14. Flüssigkeitsbehälter nach einem der Ansprüche 12 oder 13,
**dadurch gekennzeichnet,**
- **dass** der Steg (50) zumindest abschnittsweise aus einem lasertransparenten Kunststoff gebildet ist, wobei die stoffschlüssige Verbindung mittels Laserdurchstrahlschweißen gebildet worden ist.

15. Verfahren zum Herstellen eines Flüssigkeitsbehälters, mit den Verfahrensschritten:
- Spritzgießen einer ersten Halbschale (4), die eine Oberschale des Flüssigkeitsbehälters (2, 28, 38, 44, 52, 54, 60, 64, 68, 70, 72, 74) bildet, wobei die erste Halbschale (4) eine erste Trägerschicht (12) und eine erste Barriereschicht (14, 46) hat,
- Spritzgießen einer zweiten Halbschale (6), die eine Unterschale des Flüssigkeitsbehälters (2, 28, 38, 44, 52, 54, 60, 64, 68, 70, 72, 74) bildet, wobei die zweite Halbschale (6) eine zweite Trägerschicht (16) und eine zweite Barriereschicht (18, 48) hat,
- Verbinden der Halbschalen (4, 6), derart, dass die Halbschalen (4, 6) ein Vorratsvolumen (8) zur Aufnahme von Flüssigkeit (10) begrenzen, wobei die erste Barriereschicht (14, 46) außenliegend auf einer dem Vorratsvolumen (8) abgewandten Seite (20) der ersten Trägerschicht (12) angeordnet ist und wobei die zweite Barriereschicht (18, 48) innenliegend auf einer dem Vorratsvolumen (8) zugewandten Seite der zweiten Trägerschicht (16) angeordnet ist.

## Claims

1. A liquid container for a motor vehicle,
- having a first half-shell (4) that forms an upper shell of the liquid container (2, 28, 38, 44, 52, 54, 60, 64, 68, 70, 72, 74) and
- having a second half-shell (6) that forms a lower shell of the liquid container (2, 28, 38, 44, 52, 54, 60, 64, 68, 70, 72, 74),
- wherein the half-shells (4, 6) delimit a storage volume (8) for accommodating liquid (10),
- wherein the first half-shell (4) has a first support layer (12) and a first barrier layer (14, 46),
- wherein the second half-shell (6) has a second support layer (16) and a second barrier layer (18, 48),
- wherein the first barrier layer (14, 46) is externally situated on a side (20) of the first support layer (12) facing the storage volume (8), and
- wherein the second barrier layer (18, 48) is internally situated on a side (22) of the second support layer (16) facing the storage volume (8).

2. The liquid container according to Claim 1,
**characterized in that**
- the first support layer (12) on a side (30) facing the storage volume (8) has one or more molded elements (32), connecting parts (34), or functional units (36).

3. The liquid container according to Claim 2,
**characterized in that**
- the molded elements (32), connecting parts (34), or functional units (36) extend with protrusion into the storage volume (8)
and/or
- the molded elements (32) and/or connecting parts (34) have been formed in one piece with the first support layer (12) in an injection molding process and/or sequentially molded onto the first support layer (12).

4. The liquid container according to Claim 2 or Claim 3,
**characterized in that**
- all molded elements (32), connecting parts (34), or functional units (36) situated in the storage volume (8) are provided on the first support layer (12), with no molded elements, connecting parts, or functional units situated in the storage volume being provided on the second barrier layer (18, 48).

5. The liquid container according to one of Claims 1 to 3,
**characterized in that**
- a plastic (40) that is used for attaching molded elements, connecting parts, or functional units (42) is locally molded onto a side (39) of the second barrier layer (18, 48) facing away from the second support layer (16).

6. The liquid container according to one of Claims 1 to 5,
**characterized in that**
- at least one of the barrier layers (14, 18) is a one-ply film (14, 18) that has been integrally joined to the associated support layer (12, 16) in an injection molding process,
and/or
- at least one of the barrier layers (46, 48)) is a multi-ply film (46, 48)) that has been integrally joined to the associated support layer (12, 16) in an injection molding process.

7. The liquid container according to one of Claims 1 to 6,
**characterized in that**
- the half-shells (4, 6) in the connecting area (24) are integrally joined together, the first support layer (12) in the connecting area (24) being integrally joined to the second barrier layer (18, 48) and/or the second support layer, and
- the first barrier layer (14, 46) and the second barrier layer (18, 48) in the connecting area (24) are spaced apart from one another and border the first support layer (12) on both sides, wherein the first support layer (12) in the connecting area (24) forms a permeation path (26) between the storage volume (8) and the surroundings (U) of the liquid container.

8. The liquid container according to Claim 7,
**characterized in that**
- a length (1) of the permeation path (26), viewed in a cross section, is greater than or equal to twice the width (b) of the permeation path (26),
- wherein the width (b) of the permeation path corresponds to the distance between the barrier layers (14, 18, 46, 48) in the connecting area (24).

9. The liquid container according to Claim 7 or 8, **characterized in that**
- a length of the permeation path, viewed in a cross section, is greater than a wall thickness of the first half-shell (4) and of the second half-shell (6).

10. The liquid container according to one of Claims 1 to 6,
**characterized in that**
- the first barrier layer (14, 46) and the second barrier layer (18, 48) are integrally joined together.

11. The liquid container according to one of Claims 1 to 10,
**characterized in that**
- the first barrier layer (14, 46) essentially completely covers the side (20) of the first support layer (12) facing away from the storage volume (8)
and/or
- the second barrier layer (18, 48) essentially completely covers the side (22) of the second support layer (16) facing the storage volume (8).

12. The liquid container according to one of Claims 1 to 11,
**characterized in that**
- at least one of the half-shells (4, 6) has a web (50), wherein the web (50) is seated in a form-fit manner in a receptacle (56) of the respective other half-shell (4, 6) that has a complementary shape, at least in sections
- wherein an integral bond of the half-shells (4, 6) is formed along the web (50).

13. The liquid container according to Claim 12,
**characterized in that**
- the barrier layer (14, 46) of the half-shell (4) that has the web (50) is turned down around the web (50) on the end or encloses the web (50), the barrier layer in particular at least partially covering an end-face side (62) of the web (50).

14. The liquid container according to one of Claims 12 or 13, **characterized in that**
- the web (50), at least in sections, is made of a laser-transparent plastic, the integral bond having been formed by laser transmission welding.

15. A method for manufacturing a liquid container, having the method steps:
- injection molding of a first half-shell (4) that forms an upper shell of the liquid container (2, 28, 38, 44, 52, 54, 60, 64, 68, 70, 72, 74), the first half-shell (4) having a first support layer (12) and a first barrier layer (14, 46),
- injection molding of a second half-shell (6) that forms a lower shell of the liquid container (2,28, 38,44, 52, 54, 60, 64, 68, 70, 72, 74), the second half-shell (6) having a second support layer (16) and a second barrier layer (18, 48),
- joining the half-shells (4, 6) in such a way that the half-shells (4, 6) delimit a storage volume (8) for accommodating liquid (10), the first barrier layer (14, 46) being externally situated on a side (20) of the first support layer (12) facing away from the storage volume (8), and the second barrier layer (18, 48) being internally situated on a side of the second support layer (16) facing the storage volume (8).

## Revendications

1. Réservoir de liquide destiné à un véhicule automobile,
- comportant une première demi-coque (4) qui forme une coque supérieure du réservoir de liquide (2, 28, 38, 44, 52, 54, 60, 64, 68, 70, 72, 74) et
- comportant une seconde demi-coque (6) qui forme une coque inférieure du réservoir de liquide (2, 28, 38, 44, 52, 54, 60, 64, 68, 70, 72, 74),
- les demi-coques (4, 6) délimitant un volume de stockage (8) permettant de recevoir du liquide (10),
- la première demi-coque (4) présentant une première couche de support (12) et une première couche barrière (14, 46),
- la seconde demi-coque (6) présentant une seconde couche de support (16) et une seconde couche barrière (18, 48),
- la première couche barrière (14, 46) étant disposée à l'extérieur, sur un côté (20) de la première couche de support (12) détourné du volume de stockage (8), et
- la seconde couche barrière (18, 48) étant disposée à l'intérieur, sur un côté (22) de la seconde couche de support (16) faisant face au volume de stockage (8).

2. Réservoir de liquide selon la revendication 1,
**caractérisé**
- **en ce que** la première couche de support (12) présente un ou plusieurs éléments moulés (32), des pièces de raccord (34) ou des unités fonctionnelles (36) sur un côté (30) faisant face au volume de stockage (8).

3. Réservoir de liquide selon la revendication 2,
**caractérisé**
- **en ce que** les éléments moulés (32), les pièces de raccord (34) ou les unités fonctionnelles (36) s'étendent dans le volume de stockage (8) en saillie et/ou
- **en ce que** les éléments moulés (32) et/ou les pièces de raccord (34) ont été formés d'une seule pièce avec la première couche de support (12) dans un procédé de moulage par injection et/ou ont été moulés par injection séquentiellement sur la première couche de support (12).

4. Réservoir de liquide selon la revendication 2 ou la revendication 3,
**caractérisé**
- **en ce que** tous les éléments moulés (32), les pièces de raccord (34) ou les unités fonctionnelles (36) disposés dans le volume de stockage (8) sont disposés sur la première couche de support (12), aucun des éléments moulés, des pièces de raccord ou des unités fonctionnelles disposés dans le volume de stockage n'étant disposés sur la seconde couche barrière (18, 48).

5. Réservoir de liquide selon l'une des revendications 1 à 3,
**caractérisé**
- **en ce que** sur un côté (39) de la seconde couche barrière (18, 48) détourné de la seconde couche de support (16), une matière plastique (40) est injectée localement et est utilisée pour relier des éléments moulés, des pièces de raccord ou des unités fonctionnelles (42).

6. Réservoir de liquide selon l'une des revendications 1 à 5,
**caractérisé**
- **en ce qu'**au moins l'une des couches barrière (14, 18) est un film monocouche (14, 18), lequel a été relié matériellement à la couche de support (12, 16) associée dans un procédé de moulage par injection,
et/ou
- **en ce qu'**au moins l'une des couches barrière (46, 48) est un film multicouche (46, 48), lequel a été relié à la couche de support (12, 16) associée dans un procédé de moulage par injection.

7. Réservoir de liquide selon l'une des revendications 1 à 6,
**caractérisé**
- **en ce que** les demi-coques (4, 6) sont reliées matériellement l'une à l'autre dans une zone de liaison (24), la première couche de support (12) étant reliée matériellement à la seconde couche barrière (18, 48) et/ou à la seconde couche de support dans la zone de liaison (24), et
- **en ce que** la première couche barrière (14, 46) et la seconde couche barrière (18, 48) sont espacées l'une de l'autre dans la zone de liaison (24) et entourent la première couche de support (12) sur deux côtés, la première couche de support (12) formant, dans la zone de liaison (24), un chemin de perméation (26) entre le volume de stockage (8) et un environnement (U) du réservoir de liquide.

8. Réservoir de liquide selon la revendication 7,
**caractérisé**
- **en ce que**, vue en coupe transversale, une longueur (1) du chemin de perméation (26) est supérieure ou égale au double de la largeur (b) du chemin de perméation (26),
- la largeur (b) du chemin de perméation correspondant à la distance entre les couches barrières (14, 18, 46, 48) dans la zone de liaison (24).

9. Réservoir de liquide selon la revendication 7 ou 8,
**caractérisé**
- **en ce que**, vue en coupe transversale, une longueur du chemin de perméation est supérieure à une épaisseur de paroi de la première demi-coque (4) et de la seconde demi-coque (6).

10. Réservoir de liquide selon l'une des revendications 1 à 6,
**caractérisé**
- **en ce que** la première couche barrière (14, 46) et la seconde couche barrière (18, 48) sont reliées matériellement l'une à l'autre.

11. Réservoir de liquide selon l'une des revendications 1 à 10,
**caractérisé**
- **en ce que** la première couche barrière (14, 46) recouvre sensiblement complètement le côté (20) de la première couche de support (12) détourné du volume de stockage (8) et/ou
- **en ce que** la seconde couche barrière (18, 48) recouvre sensiblement complètement le côté (22) de la seconde couche de support (16) faisant face au volume de stockage (8).

12. Réservoir de liquide selon l'une des revendications 1 à 11,
**caractérisé**
- **en ce qu'**au moins l'une des demi-coques (4, 6) présente une entretoise (50), l'entretoise (50) étant située, par complémentarité de forme, dans un logement de forme complémentaire (56) au moins par sections de l'autre demi-coque respective (4, 6)
- une liaison matérielle des demi-coques (4, 6) étant formée le long de l'entretoise (50).

13. Réservoir de liquide selon la revendication 12,
**caractérisé**
- **en ce que** la couche barrière (14, 46) de la demi-coque (4) présentant l'entretoise (50) est repliée côté extrémité autour de l'entretoise (50) ou enferme l'entretoise (50), la couche barrière recouvrant, au moins partiellement, en particulier un côté frontal (62) de l'entretoise (50).

14. Réservoir de liquide selon l'une des revendications 12 ou 13,
**caractérisé**
- **en ce que** l'entretoise (50) est formée au moins par sections à partir d'une matière plastique transparente au laser, la liaison matérielle ayant été formée au moyen d'un soudage laser par transparence.

15. Procédé de fabrication d'un réservoir de liquide, comportant les étapes de procédé :
- de moulage par injection d'une première demi-coque (4) qui forme une coque supérieure du réservoir de liquide (2, 28, 38, 44, 52, 54, 60, 64, 68, 70, 72, 74), la première demi-coque (4) présentant une première couche de support (12) et une première couche barrière (14, 46),
- de moulage par injection d'une seconde demi-coque (6) qui forme une coque inférieure du réservoir de liquide (2, 28, 38, 44, 52, 54, 60, 64, 68, 70, 72, 74), la seconde demi-coque (6) présentant une seconde couche de support (16) et une seconde couche barrière (18, 48),
- de liaison des demi-coques (4, 6) de telle sorte que les demi-coques (4, 6) délimitent un volume de stockage (8) servant à recevoir du liquide (10), la première couche barrière (14, 46) étant disposée à l'extérieur, sur un côté (20) de la première couche de support (12) détourné du volume de stockage (8), et la seconde couche barrière (18, 48) étant disposée à l'intérieur, sur un côté de la seconde couche de support (16) faisant face au volume de stockage (8).
